(19) **Europäisches Patentamt**

**European Patent Office**

**Office européen des brevets**

(11) **EP 1 093 905 A2**

(12) **EUROPÄISCHE PATENTANMELDUNG**

(43) Veröffentlichungstag:
25.04.2001  Patentblatt 2001/17

(51) Int. Cl.⁷: **B29C 47/40**

(21) Anmeldenummer: 00122527.5

(22) Anmeldetag: 16.10.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.10.1999 DE 19950917**

(71) Anmelder:
- **Degussa-Hüls Aktiengesellschaft**
  **60287 Frankfurt am Main (DE)**
- **DEUTSCHES INSTITUT FÜR KAUTSCHUKTECHNOLOGIE e.V.**
  **30519 Hannover (DE)**

(72) Erfinder:
- **Skibba, Olaf**
  **D-30657 Hannover (DE)**
- **Uphus, Reinhard Dr.**
  **D-30419 Hannover (DE)**
- **Görl, Udo Dr.**
  **D-45657 Recklinghausen (DE)**
- **Schmitt, Matthias**
  **D-69151 Neckargemünd (DE)**
- **Stober, Reinhard Dr.**
  **D-63594 Hasselroth (DE)**

(54) **Doppelschneckenextruder mit neuen Schneckenelementen**

(57)  Die Erfindung betrifft ein Mehrwellenextruder, insbesonder Doppelschneckenextruder mit gleichsinnig rotierenden unds selbstreinigenden Profilen mit hoher dispersiver und distributiver Mischwirkung, wobei gleichzeitig die dissipative Erwärmung des zu extrudierenden Materials weitgehend vermieden wird.

**EP 1 093 905 A2**

**Beschreibung**

Die Erfindung betrifft einen Doppelschnekkenextruder mit gleichsinnig rotierenden und selbstreinigenden Profilen mit hoher dispersiver Mischwirkung.

Doppelschneckenextruder mit gleichsinnig rotierenden Wellen werden heute vielfach in der Kunststoffverarbeitung eingesetzt, um Zuschlagstoffe möglichst fein dispers zu zerteilen und distributiv zu verteilen. Auf diese Weise werden z. B. feste Füllstoffe (z.B. Ruß, Kreide, Kieselsäure, Glasfasern usw.) oder Flüssigkeiten (z.B. Weichmacheröle, Harze) in Kunststoffe oder Kautschuke eingemischt, aber auch das Einmischen von Farbmasterbatchen in Kunststoffe ist bekannt.

Das dispersive Mischen wird über Scher- und Dehnströmungen realisiert. Setzt man dichtkämmende, das heißt selbstreinigende Profile voraus, wird heute fast ausschließlich die von Erdmenger entwikkelte Geometrie benutzt. Diese besteht aus Kreisbogensegmenten mit dem Innen- und Außenradius der Schneckengeometrie sowie aus Kreisbogensegmenten, deren Kreisdurchmesser der theoretische Achsabstand ist, wobei in den Vorschlägen Erdmengers letztere den Innendurchmesser tangieren.

Die in dieser Geometrie hergestellten Schneckenelemente können kontinuierliche Steigungswinkel (Verdrehungen) aufweisen oder auch in Scheiben variabler Breite, deren Steigung unendlich ist (keine Verdrehung), unter Winkelversatz angeordnet sein (sog. Knetblöcke).

Vorteil dieser Geometrie ist die Selbstreinigung; d.h. für jede Winkelstellung der rotierenden Schnecke berühren sich beide Geometrien in einem Punkt. Hierbei ist natürlich das für ein reales Schnekkenelement benötigte Spiel vernachlässigt.

Ein Problem der bekannten Mischelemente ist allerdings bei der Voraussetzung eines vollständig dichtkämmenden Profils, daß sich das zu mischende Gut durch innere Reibung stark dissipativ erwärmt. Dieser Effekt ist um so größer, je hochviskoser das Gut ist. Gerade für die Herstellung von Kautschukmischungen ist dies nicht akzeptabel, da hier noch ein Vernetzungssystem eingemischt werden muß, um die Kautschukmischung später zu einem Gummiartikel vulkanisieren zu können. Da letzteres ein zeit- und temperaturabhängiger Vorgang ist, dürfen bestimmte Temperaturen beim Mischen nicht überschritten werden.

Ein weiteres Problem bekannter dispersiv mischender Schneckenelemente besteht in der mangelhaften distributiven Mischwirkung. Bei Mischelementen mit vollständig dichtkämmender Geometrie werden Stoffströme durch den Extruder (i + 1) gefördert, bei denen nur eine geringe distributive Mischwirkung festzustellen ist. Hierbei ist i die Gangzahl der Elemente (meist i = 1, 2 oder 3). Um diese schlechte distributive Mischwirkung zu verbessern, werden nach dem Stand der Technik spezielle Mischelemente eingesetzt (z. B.

Zahnmischblock, Polygonmischblock), die die (i + 1) Stoffströme zusammenführen und damit eine distributive Mischwirkung ermöglichen. Diese Mischzonen sind im allgemeinen nicht dichtkämmend und daher nicht selbstreinigend, so daß es bei längeren Produktionszeiten zu unerwünschten Ablagerungen kommt.

Aufgabe der Erfindung

Aufgabe der Erfindung ist es, ein Mischelement für einen gleichläufig rotierenden Doppelschnekkenextruder (bzw. Mehrwellenextruder mit gleichem Funktionsprinzip) zu entwickeln, bei dem die dissipative Temperaturerhöhung des zu mischenden Gutes möglichst gering, die dispersive Mischwirkung aber sehr gut ist. Zudem soll ein gewisser Grad an distributiver Mischwirkung bei den Elementen vorhanden sein, um ggf. auf konventionelle, nicht selbstreinigende distributiv wirkende Mischelemente verzichten zu können. Das Prinzip des dichtkämmenden, selbstreinigenden Profils soll trotzdem erfüllt werden.

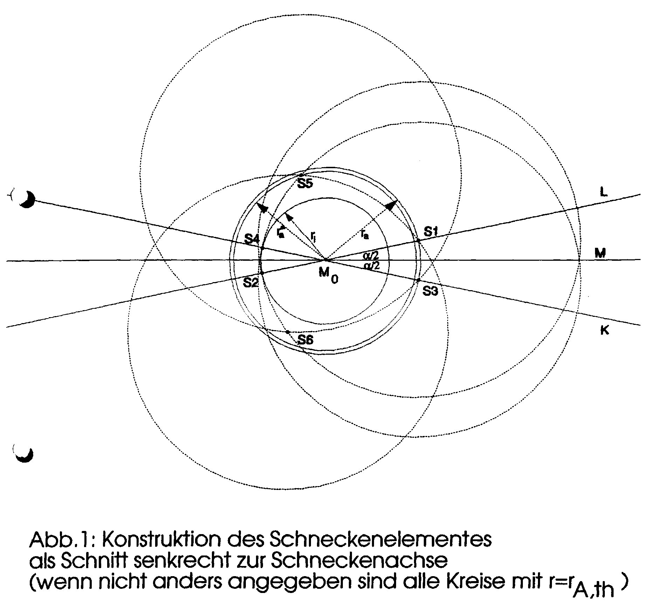

Gegenstand der Erfindung ist ein Mehrwellenextruder, insbesondere Doppelschnneckenextruder, enthaltend gleichsinnig rotierende und selbstreinigende Profile mit hoher dispersiver Mischwirkung, dargestellt in Abb. 1 als Schnitt einer Ebene senkrecht zur Schneckenachse.

Die Schneckenelemente werden durch einzelne Kreisbogensegmenten mit unterschiedlichen Radien definiert:

$r_i$ =         Innenradius des Schneckenelementes

$r_a$ =         Außenradius des Schneckenelementes

$r_a{}^*$ =         Zum Außenradius verringerter Radius, durch den zwischen dem Schnittpunkt S5 und dem Extrudergehäuse ein Scherspalt von $(r_a - r_a{}^*)$ entsteht

$r_{A,th}$ =         $(r_i + r_a)$, wobei $(r_i + r_a)$ der theoretische Achsabstand beider Schnecken-Mittellinien zueinander ist

Die Geometrie der Schneckenelemente wird im folgenden erläutert:

i) Um den Mittelpunkt $M_0$ auf der Mittellinie M sind zwei Kreise mit $r_i$ bzw. $r_a$ zu ziehen. Ebenfalls um $M_0$ ist ein Kreis mit $r = r_a{}^*$ zu zeichnen. Hierbei kann je nach Größe des gewünschten Scherspaltes beim Schnittpunkt S5 ein geeigneter Radius der kleiner ist als $r_a$ und größer ist als $r_i$ gewählt werden.

ii) Entgegen dem Uhrzeigersinn wird durch den Mittelpunkt $M_0$ eine Gerade L um den Winkel $(\alpha/2)$ gezogen mit $\alpha$ als Stegwinkel. Der rechte Schnittpunkt der Geraden mit dem Kreis des Außenradius ist S1, der linke Schnittpunkt der Geraden mit dem Kreis des Innenradius ist S2.

iii) Im Uhrzeigersinn wird durch den Mittelpunkt $M_0$ eine Gerade K um den Winkel $(\alpha/2)$ gezogen. Der rechte Schnittpunkt der Geraden mit dem Kreis des Außenradius ist S3, der linke Schnittpunkt der Geraden mit dem Kreis des Innenradius ist S4.

iv) Um den Schnittpunkt S3 wird ein Kreis mit dem Radius $r_{A,th}$ gezeichnet. Der obere Schnittpunkt mit dem Kreis mit $r_a^*$ um $M_0$ ist der Schnittpunkt S5.

v) Um den Schnittpunkt S5 wird ein Kreis mit dem Radius $r_{A,th}$ gezeichnet. Der linke Schnittpunkt mit dem Kreis mit $r_{A,th}$ um S3 ist der Schnittpunkt S6.

Das Schneckenelement zeigt sich damit als eine Aneinanderreihung von Kreisbögenabschnitten:

Zwischen S1 und S5 mit $r = r_{A,th}$ um S6

Zwischen S5 und S4 mit $r = r_{A,th}$ um S3

Zwischen S4 und S2 mit $r = r_i$ um $M_0$

Zwischen S2 und S6 mit $r = r_{A,th}$ um S1

Zwischen S6 und S3 mit $r = r_{A,th}$ um S5

Zwischen S3 und S1 mit $r = r_a$ um $M_0$

Das in einem realen Element zu berücksichtigende Spiel zwischen Schneckenelement und dem Schneckenelement der zweiten Welle bzw. dem Extrudergehäuse ist dem Fachmann bekannt und hier nicht dargestellt.

In Achsrichtung kann bei dem erfindungsgemäßen Element eine gewünschte positive oder negative Schneckensteigung (Verdrehung) aber auch eine unendliche Steigung (keine Verdrehung) realisiert sein.

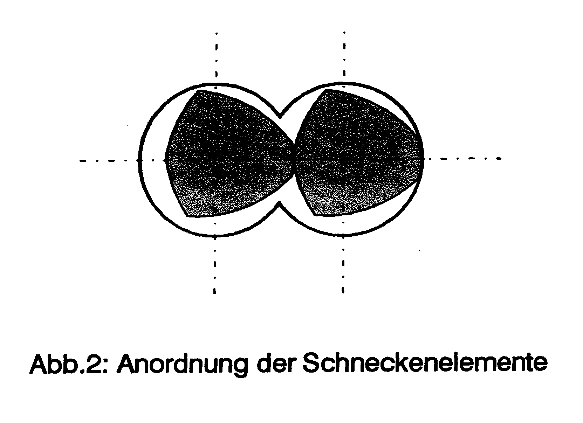

Die Anordnung der erfindungsgemäßen Schneckenelemente auf den beiden Wellen ist in Abb. 2 ebenfalls als Schnitt einer Ebene senkrecht zur Schneckenachse dargestellt. Bei einer Rotation der Schnecken entgegen dem Uhrzeigersinn (auch im Uhrzeigersinn möglich) wird das zu mischende Material an den Schneckenflanken bei S6 und S5 geschert und gedehnt, ohne daß ein Fördervolumen von den beiden Schneckenelementen eingeschlossen wird.

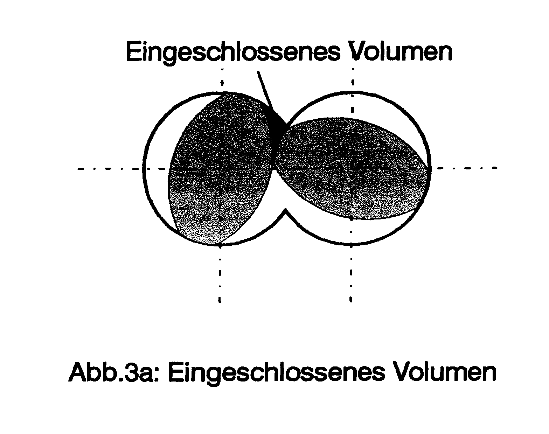

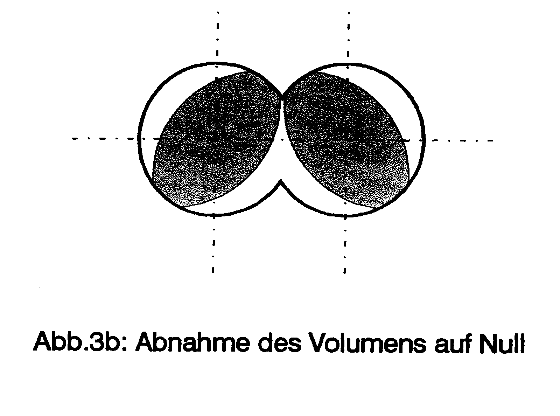

Dies ist bei konventionellen Knetelementen der Fall (vgl. Abb.3a) und führt dort bei weiterer Rotation der Wellen zu einer Abnahme des eingeschlossenen Volumens bis auf Null (vgl. Abb. 3b). Hierbei wird das Material gezwungen, durch den sehr engen Spalt zwischen Schneckenflanke und Gehäuse bzw. durch den durch beide Schneckenelemente gebildeten Zwik-

kelbereich zu strömen. Eine weitere Möglichkeit besteht im Ausweichen des Materials in achsialer Richtung.

Diese Fördermaßnahmen führen aber zu einer hohen dissipativen Erwärmung des zu mischenden Materials und den oben dargestellten resultierenden verfahrenstechnischen Problemen.

Die aus dem Stand der Technik bekannten Nachteile werden bei der hier dargestellten Lösung vermieden. Es wird kein abgeschlossenes Volumen auf Null reduziert; vielmehr kann das Material in einen Schneckengang der Nachbarschnecke ausweichen. Dadurch wird nicht nur die dissipative Erwärmung weitgehend vermieden, sondern auch noch zusätzlich eine distributive Vermischung erzeugt.

Die Förderflanke zwischen S1 und S3 schabt das Material an der Gehäusewandung ab und sorgt für den Transport des Materials.

Die Elemente können auch so ausgelegt werden, daß sie fördernd wirken.

Gegenstand der Erfindung sind ebenfalls Anordnungen, in denen die erfindungsgemäßen Schneckenelemente mit modifizierten Blistern kombiniert werden.

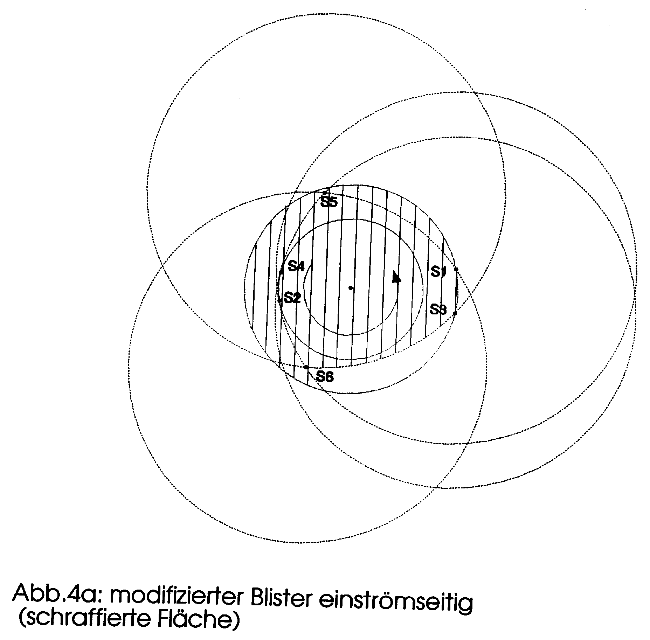

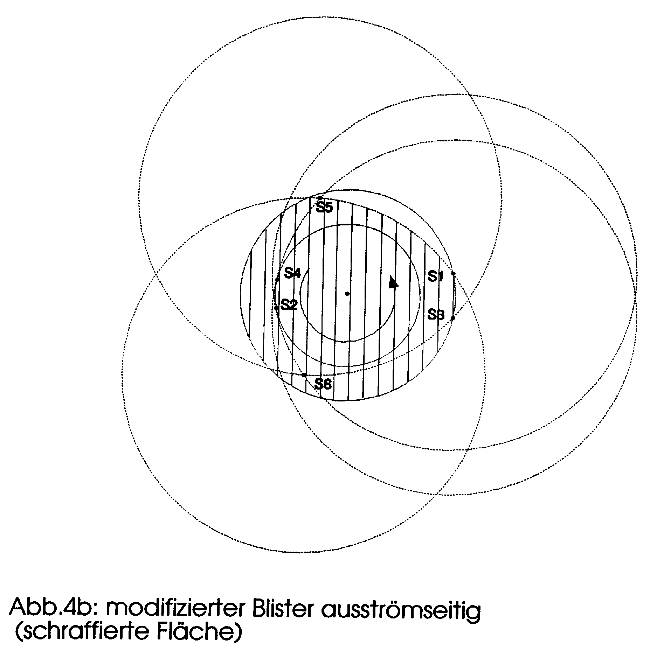

Deren Wirkungsweise und Konstruktion ist den Abbildungen 4 a und 4 b zu entnehmen.

Je nach Anforderung und durch die Eigenschaften des zu extrudierenden Materials vorgegebenen Bedingungen werden die erfindungsgemäßen Elemente in dem Doppelschneckenextruder mit bekannten Misch- und Förderelementen kombiniert.

Dazu gehören Anordnungen, die folgende Kombinationen enthalten:

- Elemente mit fördernder Schneckensteigung

- Kombination aus Elementen fördernder/rückfördernder Schneckensteigung

- Kombination mit weiteren bekannten Förderelementen

- Kombination mit bekannten dispersiv mischenden Elementen

- Kombination mit bekannten distributiv mischenden Elementen

- Kombination mit Blistern

- Kombination mit modifizierten Blistern und/oder distributiv mischenden Elementen nach Abb. 4 in der Weise, daß das zu mischende Material beim Eintritt in das Mischelement nur in dem Bereich dem neuen Element zugeführt wird, der in Rotationsrichtung gesehen der abschabenden Förderflanke nachfolgt (vgl. Abb.4a). Dadurch wird das Material gezwungen über die beiden Scherstege bei S6 und S5 zu strömen. Danach können an der Austrittsseite Blister vorgesehen werden, die eine Öffnung (in Rotationsrichtung gesehen) vor der abschabenden Förderflanke vorweisen (vgl. Abb.4b).

- mehrere Kombinationen der oben beschriebenen Elemente hintereinander

- Kombinationen mit Übergangselementen, die einen kontinuierlichen Übergang von konventionellen Elementen zu den neuen Elementen oder von den neuen Elementen zu konventionellen Elementen herstellen.

Mit Hilfe der Doppelschneckenextruder, die die erfindungsgemäßen Elemente und gegebenenfalls die neuen modifizierten Blister enthalten, sind insbesondere pulverförmige Kautschuke (Kautschukpulver) zu extrudieren.

Kautschukpulver sind im Prinzip aus dem Stand der Technik bekannt (DE-PS 37 23 213, DE-PS 37 23 214, US-PS 4,073,755).

Verbesserte Verfahren zur Herstellung und Produkte mit besserer Verarbeitungseigenschaften werden in den deutschen Patentanmeldungen 198 15 453, 198 16 972 oder 198 43 301 beschrieben. Diese Pulver werden in den Extruder eingespeist und unter Erwärmung auf den gewünschten Temperaturbereich gegebenenfalls unter Zusatz weiterer für die Verarbeitung zu Vulkanisat notwendigen Hilfsstoffe extrudiert. Die Form des austretenden Extrudats wird durch die eingesetzten Werkzeuge bestimmt.

**Patentansprüche**

1. Doppelschnneckenextruder bzw. Mehrwellenextruder, enthaltend gleichsinnig rotierende und selbstreinigende Profile mit hoher dispersiver Mischwirkung, dargestellt in Abb. 1 als Schnitt einer Ebene senkrecht zur Schneckenachse mit der Maßgabe,

   1.1 um den Mittelpunkt $M_O$ auf der Mittellinie M zwei Kreise mit $r_i$, bzw. $r_a$ und ebenfalls um $M_O$ einen Kreis mit $r = r_a^*$ zu ziehen, wobei je nach Größe des gewünschten Scherpaltes beim Schnittpunkt S5 ein geeigneter Radius gewählt werden kann, der kleiner als $r_a$ und größer als $r_i$ ist,

   1.2 entgegen dem Uhrzeigersinn durch den Mittelpunkt $M_0$ eine Gerade L um den Winkel ($\alpha/2$) zu ziehen ($\alpha$ ist dabei der Stegwinkel), wobei der rechte Schnittpunkt der Geraden mit dem Kreis des Außenradius S1 und der linke Schnittpunkt der Geraden mit dem Kreis des Innenradius S2 ist,

   1.3 im Uhrzeigersinn durch den Mittelpunkt $M_0$ eine Gerade K um den Winkel ($\alpha/2$) zu ziehen, wobei der rechte Schnittpunkt der Geraden mit dem Kreis des Außenradius S3, der linke Schnittpunkt der Geraden mit dem Kreis des Innenradius S4 ist,

   1.4 um den Schnittpunkt S3 einen Kreis mit dem Radius $r_{A,th}$ zu zeichnen wobei der obere Schnittpunkt mit dem Kreis mit $r_a^*$ um $M_0$ der Schnittpunkt S5 ist, und

   1.5 um den Schnittpunkt S5 ein Kreis mit dem Radius $r_{A,th}$ zu zeichnen, wobei der linke Schnittpunkt mit dem Kreis mit $r_{A,th}$ um S3 der Schnittpunkt S6 ist,

   so daß sich
   das Schneckenelement als Aneinanderreihung von folgenden Kreisbögenabschnitten darstellt:

   Zwischen S1 und S5 mit $r = r_{A,th}$ um S6

   Zwischen S5 und S4 mit $r = r_{A,th}$ um S3

   Zwischen S4 und S2 mit $r = r_i$ um $M_0$

   Zwischen S2 und S6 mit $r = r_{A,th}$ um S1

   Zwischen S6 und S3 mit $r = r_{A,th}$ um S5

   Zwischen S3 und S1 mit $r = r_a$ um $M_0$.

2. Doppelschneckenextruder gemäß Anspruch 1, enthaltend neben den erfindungsgemäßen Elementen Elemente einzeln oder gemeinsam (Kombinationen) ausgewählt aus der Gruppe

   - Elemente mit nur fördernde Schneckensteigung
   - Kombination von Elementen fördernden/rückfördernden Schneckensteigungen
   - Kombination von Elementen bekannten Förderelementen
   - Kombination von Elementen bekannten dispersiv mischenden Elementen
   - Kombination mit bekannten distributiv mischenden Elementen
   - Kombination mit Blistern.

3. Doppelschneckenextruder gemäß Anspruch 1, enthaltend Kombinationen mit modifizierten Blistern und/oder distributiv mischenden Elementen in der Weise, daß das zu mischende Material beim Eintritt in das Mischelement nur in dem Bereich dem neuen Element zugeführt wird, der in Rotationsrichtung gesehen der abschabenden Förderflanke nachfolgt.

**4.** Doppelschneckenextruder gemäß Anspruch 1, enthaltend Kombinationen mit Übergangselementen, die einen kontinuierlichen Übergang von konventionellen Elementen zu den neuen Elementen oder von den neuen Elementen zu konventionellen Elementen herstellen.

**5.** Verwendung der Doppelschneckenextruder gemäß den Ansprüchen 1 bis 4 zur Extrusion von pulver- oder granulatförmigem Kautschuk (Kautschukpulver), gegebenenfalls unter Eindosierung von Verarbeitungs- und/oder Vulkanisationshilfsstoffen.

**6.** Verwendung der Doppelschneckenextruder gemäß den Ansprüchen 1 bis 4 zur Extrusion von pulver- oder granulatförmigem Kunststoff bzw. dessen Mischungen mit pulver- oder granulatförmigem Kautschuk.

Abb.1: Konstruktion des Schneckenelementes
als Schnitt senkrecht zur Schneckenachse
(wenn nicht anders angegeben sind alle Kreise mit $r=r_{A,th}$ )

Abb.2: Anordnung der Schneckenelemente

Eingeschlossenes Volumen

Abb.3a: Eingeschlossenes Volumen

Abb.3b: Abnahme des Volumens auf Null

Abb.4a: modifizierter Blister einströmseitig
(schraffierte Fläche)

Abb.4b: modifizierter Blister ausströmseitig
(schraffierte Fläche)